# EUROPÄISCHE PATENTANMELDUNG

(11) **EP 4 311 422 A1**
(43) Veröffentlichungstag der Anmeldung: **31.01.2024**
(21) Anmeldenummer: 23170522.9
(22) Anmeldetag: 28.04.2023
(51) Int. Cl.: A01D 41/127

(54) **ERNTEGUTEIGENSCHAFTSERFASSUNG MITTELS EINER RGB-KAMERAVORRICHTUNG**

(30) Priorität: 28.07.2022 DE 102022118968
(71) Anmelder: CLAAS Selbstfahrende Erntemaschinen GmbH, 33428 Harsewinkel (DE)
(72) Erfinder: Belau, Sven Carsten, 33332 Gütersloh (DE); Heitmann, Christoph, 48231 Warendorf (DE); Neitemeier, Dennis, 59510 Lippetal (DE); Bönig, Ingo, 33330 Gütersloh (DE)
(74) Vertreter: CLAAS Gruppe

(57) **Zusammenfassung**

Die vorliegende Erfindung betrifft eine selbstfahrende landwirtschaftliche Arbeitsmaschine (3) mit einer künstlichen Intelligenz zur Auswertung eines RGB-Bildes (8) und ein Verfahren zur Erzeugung eines Datensatzes (1) zum Training dieser künstlichen Intelligenz.

Die vorliegende Erfindung beruht auf dem allgemeinen Gedanken, dass eine künstliche Intelligenz dazu vorgesehen und eingerichtet ist, ausgehend von einem RGB-Bild (8) eine Ernteguteigenschaft zu bestimmen.

## Beschreibung

Die vorliegende Erfindung betrifft eine selbstfahrende landwirtschaftliche Arbeitsmaschine mit einer künstlichen Intelligenz zur Auswertung eines RGB-Bildes und ein Verfahren zur Erzeugung eines Datensatzes zum Training dieser künstlichen Intelligenz.

Aus der EP 1 754 407 B1 ist eine landwirtschaftliche Erntemaschine bekannt, die mindestens eine Einrichtung zur Aufnahme und Förderung des Erntegutes und eine Weiterverarbeitungseinrichtung zur Bearbeitung des Erntegutes umfasst, wobei die Bearbeitungsintensität des Erntegutes durch die Weiterverarbeitungseinrichtung in Abhängigkeit mindestens eines Parameters des Erntegutes, welcher durch eine Messeinrichtung ermittelt wird, selbsttätig einstellbar ist, und wobei es sich um eine optoelektronische Messeinrichtung handelt, wobei diese Messeinrichtung zur Online-Messung im Erntegutfluss vor der Weiterverarbeitungseinrichtung der Erntemaschine angeordnet ist und die von der Messeinrichtung ermittelten Erntegutparameter Rückschlüsse auf den Reifegrad des Ernteguts ermöglichen. Dabei basiert das Messprinzip der Messeinrichtung auf dem spektralen Reflexionsverhalten von Pflanzen und arbeitet in einem Spektralbereich von 600 nm bis 900 nm. Daher kann die landwirtschaftliche Erntemaschine gemäß der von der Messeinrichtung ermittelten Erntegutparameter Rückschlüsse auf den Reifegrad des Ernteguts vornehmen, jedoch sind bei diesen Wellenlängen keine Rückschlüsse bezüglich des Feuchtigkeitsgehalts bzw. des Trockenmasse-Gehalts des Ernteguts möglich.

Aus der EP 1 271 139 B1 ist bekannt, dass die Feuchtigkeit der Pflanzen durch einen geeigneten, an sich bekannten Sensor erfasst werden kann. Dieser Sensor kann in der Erntemaschine angeordnet sein und die Feuchtigkeit bereits geernteter Pflanzen erfassen. Denkbar ist auch die Verwendung eines berührungslos wirkenden Sensors, der beispielsweise mit Infrarotwellen arbeitet und die Feuchtigkeit der Pflanzen vor dem Erntevorgang erfasst. Im Vergleich zur Messeinrichtung der EP 1 754 407 B1, die einen Spektralbereich von 600 nm bis 900 nm nutzt, ist gemäß der EP 1 271 139 B1 zwar eine Messung der Feuchtigkeit der Pflanzen möglich, erfordert jedoch stets Infrarotwellen im Bereich von ca. 1350 nm bis 1550 nm, da Infrarot-Licht mit einer Wellenlänge von 1450 nm von den Wassermolekülen besonders stark absorbiert wird.

Der vorliegenden Erfindung liegt die Aufgabe zugrunde, eine verbesserte oder zumindest eine alternative Ausführungsform einer selbstfahrenden landwirtschaftlichen Arbeitsmaschine anzugeben, wobei insbesondere eine Verringerung des Gesamtgewichts und/oder der Herstellungskosten und/oder der Betriebskosten bereitgestellt wird.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass eine künstliche Intelligenz dazu vorgesehen und eingerichtet ist, ausgehend von einem RGB-Bild eine Ernteguteigenschaft zu bestimmen.

Die Erfindung betrifft eine selbstfahrende landwirtschaftliche Arbeitsmaschine, insbesondere einen Mähdrescher oder Feldhäcksler, zur Aufnahme von Erntegut und zur Bearbeitung und Förderung eines aus dem aufgenommenen Erntegut gebildeten Erntegutstroms. Diese selbstfahrende landwirtschaftliche Arbeitsmaschine weist wenigstens eine Steuervorrichtung zur Steuerung der selbstfahrenden landwirtschaftlichen Arbeitsmaschine auf.

Die Steuervorrichtung der selbstfahrenden landwirtschaftlichen Arbeitsmaschine kann zur Steuerung und/oder Regelung der selbstfahrenden landwirtschaftlichen Arbeitsmaschine, insbesondere zur Steuerung und/oder Regelung von Arbeitsaggregaten und/oder Komponenten der selbstfahrenden landwirtschaftlichen Arbeitsmaschine, ausgebildet und/oder programmiert sein. Hierfür kann die Steuervorrichtung mit den Arbeitsaggregaten und/oder Komponenten kommunizierend verbunden sein.

Vorzugsweise kann sich der Begriff "Steuervorrichtung" auf eine Elektronikschaltung (z. B. mit Mikroprozessor(en) und Datenspeicher(n)) und/oder eine mechanische Steuerung beziehen, die je nach Ausbildung Steuerungsaufgaben und/oder Regelungsaufgaben übernehmen und/oder ausführen kann. Auch wenn hierin der Begriff "Steuern" verwendet wird, kann damit gleichsam zweckmäßig auch "Regeln" bzw. "Steuern mit Rückkopplung" umfasst sein.

Unter einer kommunizierenden Verbindung kann hier zu verstehen sein, dass zwischen zwei miteinander kommunizierend verbundenen Komponenten eine Datenverbindung, insbesondere eine bidirektionale oder unidirektionale Datenverbindung, ausgebildet ist, mit der elektrische Signale, insbesondere Steuersignale und/oder Regelsignale und/oder Messsignale, in analoger Form und/oder digitaler Form übertragbar sind. Diese kommunizierende Verbindung, insbesondere bei mehr als zwei Komponenten, kann ein Bussystem ausbilden. Ferner können diese miteinander kommunizierend verbundenen Komponenten eine kabelgebundene und/oder drahtlose Datenverbindung ausbilden.

Die selbstfahrende landwirtschaftliche Arbeitsmaschine weist wenigstens eine RGB-Kameravorrichtung zur Erfassung eines RGB-Bildes, insbesondere eines RGB-Bildes des Ernteguts und/oder des Erntegutstroms, auf. Ein RGB-Bild, welches mittels der RGB-Kameravorrichtung erfasst wird, kann in Form von RGB-Bilddaten und/oder in Form eines RGB-Bilddatensatzes ausgebildet sein, wobei RGB die Bedeutung Rot, Grün und Blau hat. Unter Bilddaten und/oder unter einem Bilddatensatz sind Daten zu verstehen, die auf einem Datenspeicher gespeichert werden können. Die RGB-Kameravorrichtung kann dazu ausgebildet sein, lediglich sichtbares Licht, insbesondere mit Wellenlängen von 400 nm bis zu 780 nm, aufzunehmen. Die RGB-Kameravorrichtung kann eine sichtbares Licht aufnehmende RGB-Kamera sein.

Die selbstfahrende landwirtschaftliche Arbeitsmaschine weist wenigstens eine Recheneinheit auf, die dazu vorgesehen und eingerichtet ist, eine künstliche Intelligenz, insbesondere eine computerimplementierte künstliche Intelligenz, zur Auswertung eines RGB-Bildes zu nutzen. Die Recheneinheit kann kommunizierend mit der Steuervorrichtung verbunden sein. Die RGB-Kameravorrichtung kann kommunizierend mit der Steuervorrichtung und/oder kommunizierend mit der Recheneinheit verbunden sein.

Die künstliche Intelligenz ist dazu vorgesehen und eingerichtet, eine Ernteguteigenschaft zu bestimmen, wobei die Recheneinheit dazu vorgesehen und eingerichtet ist, insbesondere mittels der Ernteguteigenschaft, eine Feuchte des Ernteguts zu bestimmen. Unter Feuchte kann eine Feuchtigkeit und/oder ein Feuchtigkeitswert zu verstehen sein.

Bei einer vorteilhaften Weiterbildung der erfindungsgemäßen Lösung ist vorgesehen, dass die Feuchte sich auf das Erntegut auf einem zu bearbeitenden Territorium und/oder sich auf das aufgenommene Erntegut, welches den Erntegutstrom ausbildet, bezieht.

Bei einer vorteilhaften Weiterbildung der erfindungsgemäßen Lösung ist vorgesehen, dass die künstliche Intelligenz dazu vorgesehen und eingerichtet ist, für das RGB-Bild als Ernteguteigenschaft einen Erntegutstrom-Skalarwert einer nicht vorhandenen Infrarot-Vorrichtung zu bestimmen. Dies ermöglicht es, mittels der RGB-Bilder die Feuchte des Ernteguts zu ermitteln, wobei auf eine Infrarot-Vorrichtung bzw. IR-Vorrichtung verzichtet werden kann.

Bei einer vorteilhaften Weiterbildung der erfindungsgemäßen Lösung ist vorgesehen, dass die RGB-Kameravorrichtung an der selbstfahrenden landwirtschaftlichen Arbeitsmaschine zur Erfassung des RGB-Bildes des geförderten Erntegutstroms und/oder zur Erfassung des RGB-Bildes des Ernteguts angeordnet ist.

Bei einer vorteilhaften Weiterbildung der erfindungsgemäßen Lösung ist vorgesehen, dass die RGB-Kameravorrichtung an einer Fördervorrichtung der selbstfahrenden landwirtschaftlichen Arbeitsmaschine zur Erfassung des geförderten Erntegutstroms angeordnet ist, und/oder dass die RGB-Kameravorrichtung an einem Anbaugerät der selbstfahrenden landwirtschaftlichen Arbeitsmaschine zur Erfassung des geförderten Erntegutstroms und/oder des Ernteguts angeordnet ist, und/oder dass die RGB-Kameravorrichtung innerhalb einer Fahrerkabine der selbstfahrenden landwirtschaftlichen Arbeitsmaschine zur Erfassung des Ernteguts angeordnet ist. Es können mehrere RGB-Kameravorrichtungen an und/oder in der selbstfahrenden landwirtschaftlichen Arbeitsmaschine vorgesehen sein.

Bei einer vorteilhaften Weiterbildung der erfindungsgemäßen Lösung ist vorgesehen, dass die künstliche Intelligenz ein Neuronales Netzwerk ist, welches dazu trainiert ist, für ein RGB-Bild eines Ernteguts als Ernteguteigenschaft einen Trockenmassen-Skalarwert des Ernteguts zu ermitteln und/oder für ein RGB-Bild eines Erntegutstroms als Ernteguteigenschaft einen Trockenmassen-Skalarwert des zu Erntegutstroms zu ermitteln.

Das neuronale Netzwerk kann als "Convolutional Neural Network" und/oder "faltendes neuronales Netz" ausgebildet sein. Das neuronale Netzwerk kann ein Regressionsnetz, insbesondere ein MobileNet oder ein MobileNetV2, sein. Das neuronale Netzwerk kann als computerimplementiertes neuronales Netzwerk ausgebildet und/oder programmiert sein.

Bei einer vorteilhaften Weiterbildung der erfindungsgemäßen Lösung ist vorgesehen, dass die Steuervorrichtung dazu ausgebildet und/oder programmiert ist, die selbstfahrende landwirtschaftliche Arbeitsmaschine basierend auf der mittels der Recheneinheit bestimmten Feuchte des Ernteguts anzusteuern.

Bei einer vorteilhaften Weiterbildung der erfindungsgemäßen Lösung ist vorgesehen, dass der Erntegutstrom-Skalarwert ein Trockenmassen-Skalarwert, insbesondere ein Trockenmassen-Skalarwert des Erntegutstroms, ist. Ein Trockenmassen-Skalarwert ist ein Wert für den Trockenmassengehalt des Erntegutstroms.

Bei einer vorteilhaften Weiterbildung der erfindungsgemäßen Lösung ist vorgesehen, dass eine Erfassung einer Ernteguteigenschaft des innerhalb der selbstfahrenden landwirtschaftlichen Arbeitsmaschine geförderten Erntegutstroms in Form eines RGB-Bildes mittels einer RGB-Kameravorrichtung erfolgt. Insbesondere kann diese RGB-Kameravorrichtung einen geförderten Erntegutstrom in einem Auswurfkrümmer, insbesondere eines Feldhäckslers, in Form eines RGB-Bildes erfassen.

Bei einer vorteilhaften Weiterbildung der erfindungsgemäßen Lösung ist vorgesehen, dass eine Erfassung einer Ernteguteigenschaft des Ernteguts in Form eines RGB-Bildes mittels einer RGB-Kameravorrichtung erfolgt, wobei die RGB-Kameravorrichtung an einem Anbaugerät, insbesondere einem Arbeitsaggregat und/oder einem Vorsatzgerät, der selbstfahrenden landwirtschaftlichen Arbeitsmaschine und/oder innerhalb einer Fahrerkabine der selbstfahrenden landwirtschaftlichen Arbeitsmaschine angeordnet ist.

Beispielsweise kann ein ermittelter Erntegutstrom-Skalarwert zur Ansteuerung von Komponenten der selbstfahrenden landwirtschaftlichen Arbeitsmaschine über ein CAN-Bus der selbstfahrenden landwirtschaftlichen Arbeitsmaschine übermittelt werden.

Die Position der RGB-Kameravorrichtung an und/oder innerhalb der selbstfahrende landwirtschaftlichen Arbeitsmaschine kann mit der Position der RGB-Kameravorrichtung übereinstimmen, in der RGB-Kameravorrichtung im nachfolgenden Abschnitt zur Erstellung des Datensatz für die künstliche Intelligenz positioniert war.

Ferner betrifft die Erfindung ein Verfahren zur Erzeugung eines Datensatzes zum Training der künstlichen Intelligenz der erfindungsgemäßen selbstfahrenden landwirtschaftlichen Arbeitsmaschine mit den folgenden Verfahrensschritten. Ein solcher Datensatz für die Steuervorrichtung kann derart ausgebildet sein, dass dieser Datensatz auf einem Datenspeicher, insbesondere auf einem computerbasierenden Datenspeicher, hinterlegt werden kann und die Steuervorrichtung auf diesen Datensatz zugreifen kann.

Das erfindungsgemäße Verfahren sieht eine Erfassung einer Ernteguteigenschaft, insbesondere des innerhalb der selbstfahrenden landwirtschaftlichen Arbeitsmaschine geförderten Erntegutstroms, in Form eines Erntegutstrom-Skalarwertes mittels einer Infrarot-Vorrichtung vor. Ein Erntegutstrom-Skalarwert ist ein skalarer Wert bezüglich einer Eigenschaft des vom Feld getrennten Erntegutes, welches durch die selbstfahrende landwirtschaftliche Arbeitsmaschine gefördert wird. Infrarot kann mit IR abgekürzt sein, während Nahinfrarot mir NIR abgekürzt sein kann. Eine Infrarot-Vorrichtung kann eine Infrarot-Kamera aufweisen, die Infrarot-Bilddaten des geförderten Erntegutstroms erfasst und aus diesen Infrarot-Bilddaten den Erntegutstrom-Skalarwert ermittelt. Alternativ oder zusätzlich kann die Infrarot-Vorrichtung einen Infrarot-Sensor aufweisen, der den Erntegutstrom-Skalarwert erfasst. Alternativ oder zusätzlich kann die Infrarot-Vorrichtung eine Infrarot-Strahlungsquelle und/oder ein Infrarotspektrometer, insbesondere zur Erfassung des Erntegutstrom-Skalarwertes, aufweisen. Solche Infrarot-Bilddaten und/oder die Erntegutstrom-Skalarwerte können derart ausgebildet sein, dass diese auf einem Datenspeicher, insbesondere auf einem computerbasierenden Datenspeicher, hinterlegt werden können und die Steuervorrichtung auf diesen zugreifen kann.

Das erfindungsgemäße Verfahren sieht eine Erfassung eines RGB-Bildes des Ernteguts und/oder des Erntegutstroms mittels einer RGB-Kameravorrichtung vor. Ein RGB-Bild, welches mittels der RGB-Kameravorrichtung erfasst wird, kann in Form von RGB-Bilddaten und/oder in Form eines RGB-Bilddatensatzes ausgebildet sein, wobei RGB die Bedeutung Rot, Grün und Blau hat. Unter Bilddaten und/oder unter einem Bilddatensatz sind Daten zu verstehen, die auf einem Datenspeicher gespeichert werden können. Die RGB-Kameravorrichtung kann dazu ausgebildet sein, lediglich sichtbares Licht, insbesondere mit Wellenlängen von 400 nm bis zu 780 nm, aufzunehmen. Die RGB-Kameravorrichtung kann eine sichtbares Licht aufnehmende RGB-Kamera sein.

Das erfindungsgemäße Verfahren sieht die Erzeugung des Datensatzes vor, in dem wenigstens ein RGB-Bild der RGB-Kameravorrichtung wenigstens einem Erntegutstrom-Skalarwert, insbesondere der Infrarot-Vorrichtung, zugeordnet wird. Dieser Datensatz, der die Zuordnung und/oder Verknüpfung der RGB-Bilder mit dem Erntegutstrom-Skalarwerten aufweist, ermöglicht die Ermittlung eines Erntegutstrom-Skalarwertes mittels einer im Vergleich zur Infrarot-Vorrichtung kostengünstigen RGB-Kameravorrichtung, da auf eine Infrarot-Vorrichtung beim Vorliegen des erzeugten erfindungsgemäßen Datensatzes verzichtet werden kann und trotzdem weiterhin Erntegutstrom-Skalarwerte ermittelt werden können.

Bei einer vorteilhaften Weiterbildung des erfindungsgemäßen Verfahrens ist vorgesehen, dass die Fördergeschwindigkeit des aufgenommenen Ernteguts innerhalb der selbstfahrenden landwirtschaftlichen Arbeitsmaschine, also des Erntegutstroms, basierend auf Einstellungsparametern der selbstfahrenden landwirtschaftlichen Arbeitsmaschine ermittelt wird. Die Steuervorrichtung der selbstfahrenden landwirtschaftlichen Arbeitsmaschine kann zur Ermittlung der Fördergeschwindigkeit des aufgenommenen Ernteguts basierend auf Einstellungsparametern der selbstfahrenden landwirtschaftlichen Arbeitsmaschine ausgebildet und/oder programmiert sein.

Die RGB-Kameravorrichtung und Infrarot-Vorrichtung weisen, insbesondere bezüglich des Erntegutstroms innerhalb der selbstfahrenden landwirtschaftlichen Arbeitsmaschine, voneinander eine Beabstandung auf. Mit anderen Worten ausgedrückt, erfasst RGB-Kameravorrichtung im Vergleich zur Infrarot-Vorrichtung nicht das gleiche Erntegut des Erntegutstroms zu einem gegebenen Zeitpunkt. Um daher eine zutreffende und/oder passende Zuordnung eines RGB-Bild der RGB-Kameravorrichtung und eines Erntegutstrom-Skalarwertes der Infrarot-Vorrichtung zu erzielen, wird wenigstens ein RGB-Bild der RGB-Kameravorrichtung mit wenigstens einem Erntegutstrom-Skalarwert der Infrarot-Vorrichtung zeitlich in Abhängigkeit der Fördergeschwindigkeit des aufgenommenen Ernteguts und in Abhängigkeit der Beabstandung der RGB-Kameravorrichtung und der Infrarot-Vorrichtung verknüpft, sodass sich das RGB-Bild und der Erntegutstrom-Skalarwert auf das gleiche Erntegut des Erntegutstroms beziehen.

Bei einer vorteilhaften Weiterbildung des erfindungsgemäßen Verfahrens ist vorgesehen, dass mehrere RGB-Bilder der RGB-Kameravorrichtung einem, insbesondere genau einem, Erntegutstrom-Skalarwert der Infrarot-Vorrichtung zugeordnet werden. Da eine RGB-Kameravorrichtung pro festgelegte Zeiteinheit mehrere RGB-Bilder im Vergleich zu der Anzahl der Erntegutstrom-Skalarwerte der Infrarot-Vorrichtung erfassen kann, kann hierdurch eine richtige Zuordnung der RGB-Bilder und der Erntegutstrom-Skalarwerte erzielt werden. Kann es beispielsweise sein, dass pro Sekunde 30 RGB-Bilder durch die RGB-Kameravorrichtung erzeugt werden, während die Infrarot-Vorrichtung pro Sekunde lediglich einen Erntegutstrom-Skalarwert ermittelt.

Bei einer vorteilhaften Weiterbildung der erfindungsgemäßen Lösung ist vorgesehen, dass die Erzeugung des Datensatzes mittels der Steuervorrichtung der selbstfahrenden landwirtschaftlichen Arbeitsmaschine und/oder mittels einer Computervorrichtung außerhalb der selbstfahrenden landwirtschaftlichen Arbeitsmaschine erfolgt.

Bei einer vorteilhaften Weiterbildung des erfindungsgemäßen Verfahrens ist vorgesehen, dass der Erntegutstrom-Skalarwert ein Trockenmassen-Skalarwert, insbesondere ein Trockenmassen-Skalarwert des Erntegutstroms, ist. Ein Trockenmassen-Skalarwert ist ein Wert für den Trockenmassengehalt des Erntegutstroms.

Bei einer vorteilhaften Weiterbildung des erfindungsgemäßen Verfahrens ist vorgesehen, dass eine Erfassung einer Ernteguteigenschaft des innerhalb der selbstfahrenden landwirtschaftlichen Arbeitsmaschine geförderten Erntegutstroms in Form eines RGB-Bildes mittels einer RGB-Kameravorrichtung erfolgt. Insbesondere kann diese RGB-Kameravorrichtung einen geförderten Erntegutstrom in einem Auswurfkrümmer, insbesondere eines Feldhäckslers, in Form eines RGB-Bildes erfassen.

Bei einer vorteilhaften Weiterbildung des erfindungsgemäßen Verfahrens ist vorgesehen , dass eine Erfassung einer Ernteguteigenschaft des Ernteguts in Form eines RGB-Bildes mittels einer RGB-Kameravorrichtung erfolgt, wobei die RGB-Kameravorrichtung an einem Anbaugerät, insbesondere einem Arbeitsaggregat und/oder einem Vorsatzgerät, der selbstfahrenden landwirtschaftlichen Arbeitsmaschine und/oder innerhalb einer Fahrerkabine der selbstfahrenden landwirtschaftlichen Arbeitsmaschine angeordnet ist.

Bei einer vorteilhaften Weiterbildung des erfindungsgemäßen Verfahrens ist vorgesehen, dass die RGB-Kameravorrichtung und/oder die Infrarot-Vorrichtung an einer Fördervorrichtung der selbstfahrenden landwirtschaftlichen Arbeitsmaschine zur Erfassung eines durch diese Fördervorrichtung strömenden Erntegutstroms angeordnet ist. Dies hat den Vorteil, dass Umwelt-Einflüsse, wie variierende Lichtverhältnisse oder Schattenwürfe, keinen Einfluss auf die Erfassung eines RGB-Bildes und/oder des Erntegutstrom-Skalarwertes haben.

Bei einer vorteilhaften Weiterbildung des erfindungsgemäßen Verfahrens ist vorgesehen, dass die Infrarot-Vorrichtung eine NIR-Vorrichtung ist, wobei NIR die Bedeutung Nahinfrarot hat. Hierbei kann es vorgesehen sein, dass die NIR-Vorrichtung dazu ausgebildet ist, Erntegutstrom-Skalarwerte mittels Nahinfrarot-Strahlung zu erfassen. Diese Nahinfrarot-Strahlung kann Strahlung in einem Wellenlängenbereich von 1350 nm bis 1550 nm, insbesondere von 1400 nm bis 1500 nm, aufweisen. Die Nahinfrarot-Strahlung kann die Wellenlänge von 1450 nm aufweisen, die von den Wassermolekülen besonders stark absorbiert wird.

Bei einer vorteilhaften Weiterbildung des erfindungsgemäßen Verfahrens ist vorgesehen, dass die selbstfahrende landwirtschaftliche Arbeitsmaschine wenigstens einen Datenspeicher aufweist, auf dem der Datensatz hinterlegt werden kann. Die selbstfahrende landwirtschaftliche Arbeitsmaschine kann einen Datenspeicher, insbesondere einen computerbasierenden Datenspeicher, aufweisen, in dem der Datensatz und oder Daten für die künstliche Intelligenz hinterlegt werden, sodass die Steuervorrichtung den Datensatz erzeugen kann.

Weitere wichtige Merkmale und Vorteile der Erfindung ergeben sich aus den Unter-ansprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine selbstfahrende landwirtschaftliche Arbeitsmaschine mit einer RGB-Kameravorrichtung am Vorsatzgerät, und
- Fig. 2: eine selbstfahrende landwirtschaftliche Arbeitsmaschine mit einer RGB-Kameravorrichtung in einer Fahrerkabine, und
- Fig. 3: eine selbstfahrende landwirtschaftliche Arbeitsmaschine mit einer RGB-Kameravorrichtung an einer Fördervorrichtung, und
- Fig. 4: eine selbstfahrende landwirtschaftliche Arbeitsmaschine mit einer konkretisierenden Darstellung der RGB-Kameravorrichtung an der Fördervorrichtung,
- Fig. 5: eine selbstfahrende landwirtschaftliche Arbeitsmaschine zur Erzeugung eines Datensatzes zum Training der künstlichen Intelligenz.

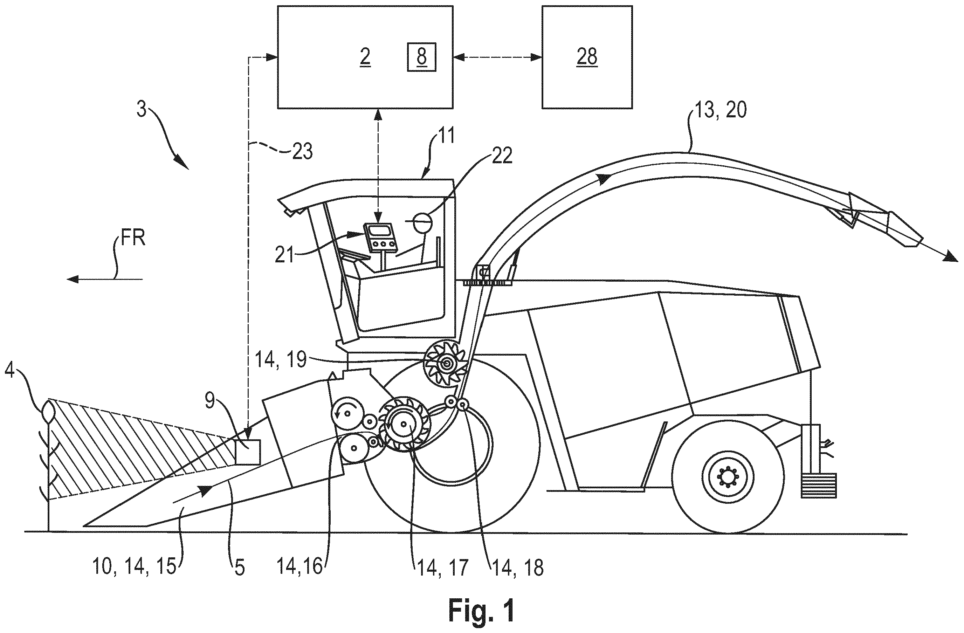

Fig. 1 zeigt eine selbstfahrende landwirtschaftliche Arbeitsmaschine 3 in Form eines selbstfahrenden Feldhäckslers zur Aufnahme von Erntegut 4, zur Bearbeitung und zur Förderung eines aus dem aufgenommenen Erntegut 4 gebildeten Erntegutstroms 5.

Die selbstfahrende landwirtschaftliche Arbeitsmaschine 3 weist ein Arbeitsaggregat 14 in Form eines Anbaugerätes 10, welches ein Vorsatzgerät 15 zur Aufnahme von Erntegut 4 ausbildet. Im Betrieb der selbstfahrenden landwirtschaftlichen Arbeitsmaschine 3 fährt diese in eine Fahrtrichtung FR und nimmt dabei mit dem Vorsatzgerät 15 das Erntegut 4 auf. Im Erntebetrieb der selbstfahrende landwirtschaftliche Arbeitsmaschine 3 wird das Erntegut 4 vom Vorsatzgerät 15 geschnitten. Das geschnittene Erntegut 4 bildet einen Erntegutstrom 5 aus, der durch die selbstfahrende landwirtschaftliche Arbeitsmaschine 3 gefördert wird.

Das Vorsatzgerät 15 ist austauschbar an der selbstfahrenden landwirtschaftlichen Arbeitsmaschine angeordnet. In Abhängigkeit vom Erntegut 4 und dem Erntegutzweck können so verschiedene Vorsatzgeräte 15 genutzt werden. Als Vorsatzgeräte 22 kommen beispielsweise eine Pick up, ein Maisvorsatz, ein Mähwerk (Direct Disc), ein Maispflücker oder ein Schneidwerk, insbesondere mit Haspel, zum Einsatz.

Das Vorsatzgerät 15 nimmt das Erntegut 4 auf und fördert den Erntegutstrom 5 zu einem Erntegutbearbeitungskanal der selbstfahrenden landwirtschaftlichen Arbeitsmaschine 3, wobei das Erntegut 4 bearbeitet und anschließend zu einer Fördervorrichtung 13, die als einem Auswurfkrümmer 20 ausgebildet ist, gefördert wird.

Die selbstfahrende landwirtschaftliche Arbeitsmaschine 3 weist ein Arbeitsaggregat 14 in Form von Vorpresswalzen 16 und ein weiteres Arbeitsaggregat 14 in Form einer Häckseltrommel 17 zum Verarbeiten des Erntegutstroms 5 auf. Ferner weist die selbstfahrende landwirtschaftliche Arbeitsmaschine 3 ein Arbeitsaggregat 14 in Form einer Nachbeschleunigungstrommel 19 zum Nachbeschleunigen des Erntegutstroms 5 auf. Der Erntegutbearbeitungskanal kann ein Arbeitsaggregat 14 in Form einer Konditioniereinrichtung 18, insbesondere in Form eines Corncrackers, zur Konditionierung des Erntegutstroms 5 aufweisen.

Die selbstfahrende landwirtschaftliche Arbeitsmaschine 3 weist eine Steuervorrichtung 2 zur Steuerung und/oder Regelung der selbstfahrenden landwirtschaftlichen Arbeitsmaschine 3, eine RGB-Kameravorrichtung 9 zur Erfassung eines RGB-Bildes 8 des Ernteguts 4 und eine Recheneinheit 28 auf, die dazu vorgesehen und eingerichtet ist, eine künstliche Intelligenz zur Auswertung eines RGB-Bildes 8 zu nutzen. Die nicht dargestellte künstliche Intelligenz ist dazu vorgesehen und eingerichtet, eine Ernteguteigenschaft zu bestimmen, wobei die Recheneinheit 28 dazu vorgesehen und eingerichtet ist, eine Feuchte des Ernteguts 4 zu bestimmen.

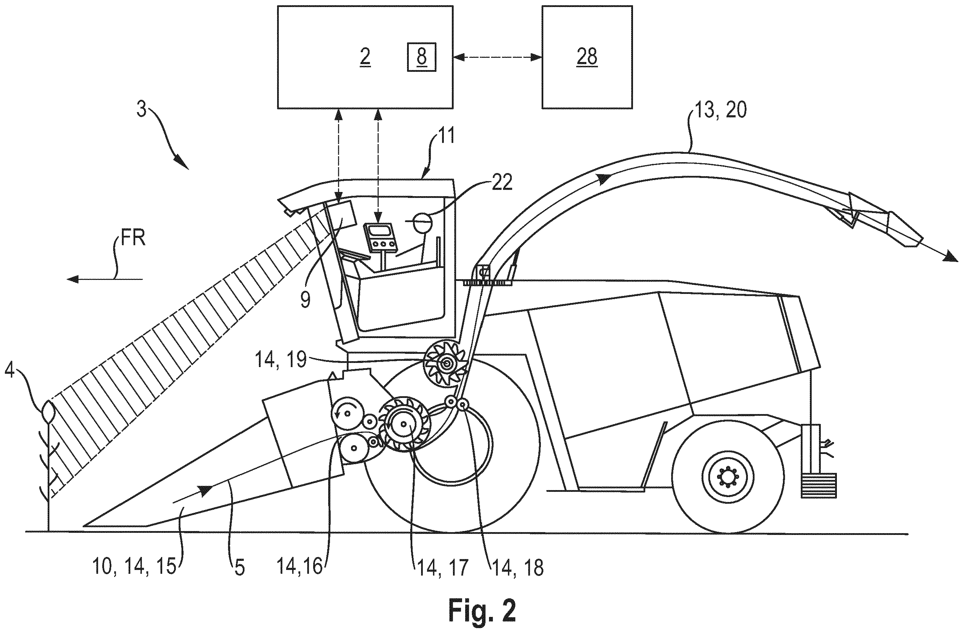

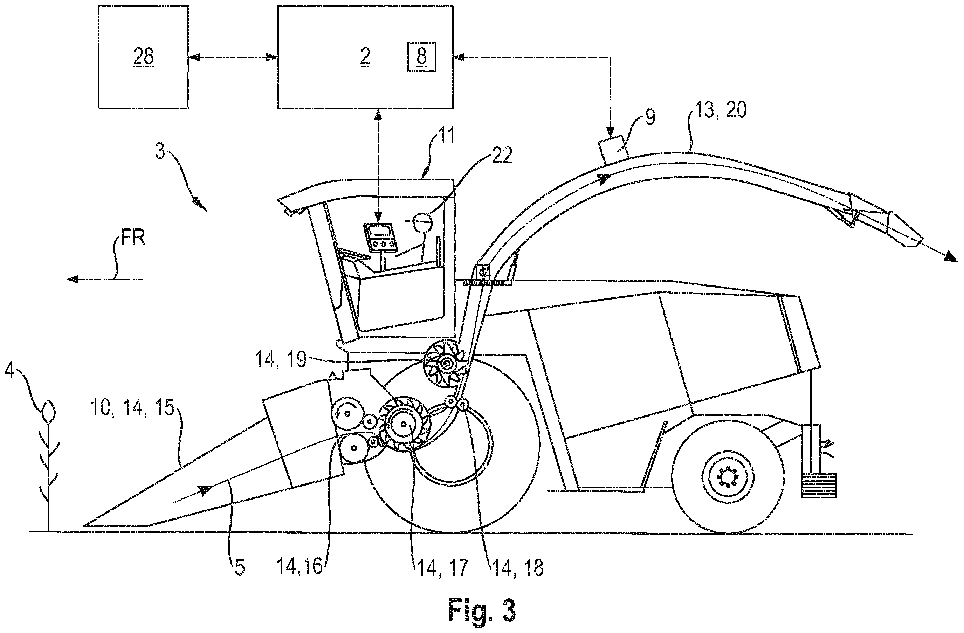

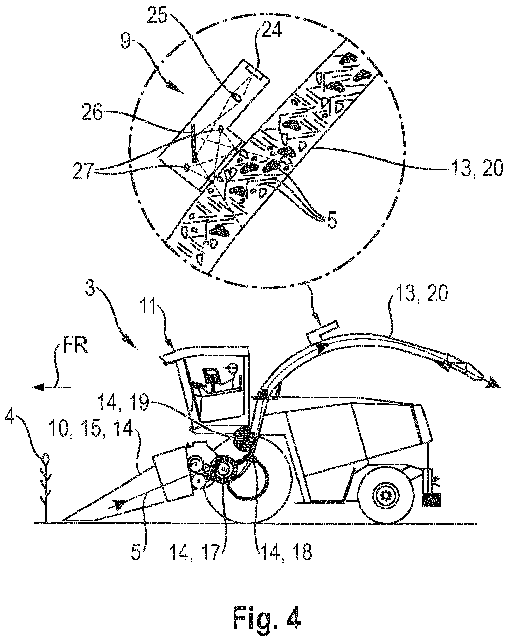

Die RGB-Kameravorrichtung 9 ist in der Fig. 1 zur Erfassung eines RGB-Bildes 8 des Ernteguts 4 an dem Vorsatzgerät 15 der selbstfahrenden landwirtschaftlichen Arbeitsmaschine 3 angeordnet, jedoch kann die RGB-Kameravorrichtung 9 auch an der selbstfahrende landwirtschaftliche Arbeitsmaschine 3 derart angeordnet sein, wie es in den Fig. 2 bis 4 dargestellt ist, wobei in den Fig. 3 und 4 die RGB-Kameravorrichtung 9 RGB-Bilder 8 des Erntegutstroms 5 erfasst.

In der Fig. 2 ist eine selbstfahrende landwirtschaftliche Arbeitsmaschine 3 gezeigt, deren RGB-Kameravorrichtung 9 in der Fahrerkabine 11 angeordnet ist und RGB-Bilder 8 des Erntegutes 4 erzeugt. Je nach Ausgestaltung des Vorsatzgerät 15 und der Ausrichtung der RGB-Kameravorrichtung 9 in der Fig. 2 kann vorgesehen sein, dass die RGB-Kameravorrichtung 9 neben dem Erntegut 4 auch das Vorsatzgerät 15 erfasst. In einem solchen Fall kann die RGB-Kameravorrichtung 9 dazu ausgebildet und/oder programmiert sein, ein erfasstes Vorsatzgerät 15 auf dem RGB-Bild 8 auszublenden.

In der Fig. 3 ist eine selbstfahrende landwirtschaftliche Arbeitsmaschine 3 gezeigt, deren RGB-Kameravorrichtung 9 am Auswurfkrümmer 20 angeordnet ist und RGB-Bilder 8 des Erntegutstroms 5 erzeugt.

In der Fig. 4 ist die selbstfahrende landwirtschaftliche Arbeitsmaschine 3 der Fig. 3 dargestellt, wobei Details bezüglich der RGB-Kameravorrichtung 9 dargestellt sind. Die RGB-Kameravorrichtung 9 hat eine RGB-Sensor 24, eine Lichtquelle 27, eine Linse 25 und/oder einen Spiegel 26.

Die Steuervorrichtung 2 ist kommunizierend mit der RGB-Kameravorrichtung 9 und der Recheneinheit 28 mittels jeweils einer Datenleitung 23 zum Datenaustausch verbunden. Die Steuervorrichtung 2 kann kommunizierend mit einem Terminal 21, welches z.B. in der Fahrerkabine 11 angeordnet ist, verbunden sein, um beispielsweise eine Ansteuerung des Terminals 21, insbesondere das Anzeigen der Feuchte des Ernteguts 4 für einen Benutzer 22 der selbstfahrenden landwirtschaftlichen Arbeitsmaschine 3, zu bewirken.

Die Recheneinheit 28 ist dazu vorgesehen und eingerichtet, mittels der Ernteguteigenschaft eine Feuchte des Ernteguts 4 auf einem zu bearbeitenden Territorium und/oder eine Feuchte des aufgenommenen Ernteguts 4, welches den Erntegutstrom 5 ausbildet, zu bestimmen. Die nicht dargestellte künstliche Intelligenz kann dazu vorgesehen und eingerichtet sein, für das RGB-Bild 8 als Ernteguteigenschaft einen Erntegutstrom-Skalarwert 6 einer nicht vorhandenen Infrarot-Vorrichtung 7 zu bestimmen. Ferner kann die nicht dargestellte künstliche Intelligenz ein Neuronales Netzwerk sein, welches dazu trainiert ist, für ein RGB-Bild 8 eines Ernteguts 4 als Ernteguteigenschaft einen Trockenmassen-Skalarwert 6 des Ernteguts 4 zu ermitteln und/oder für ein RGB-Bild 8 eines Erntegutstroms 5 als Ernteguteigenschaft einen Trockenmassen-Skalarwert 6 des zu Erntegutstroms 5 zu ermitteln.

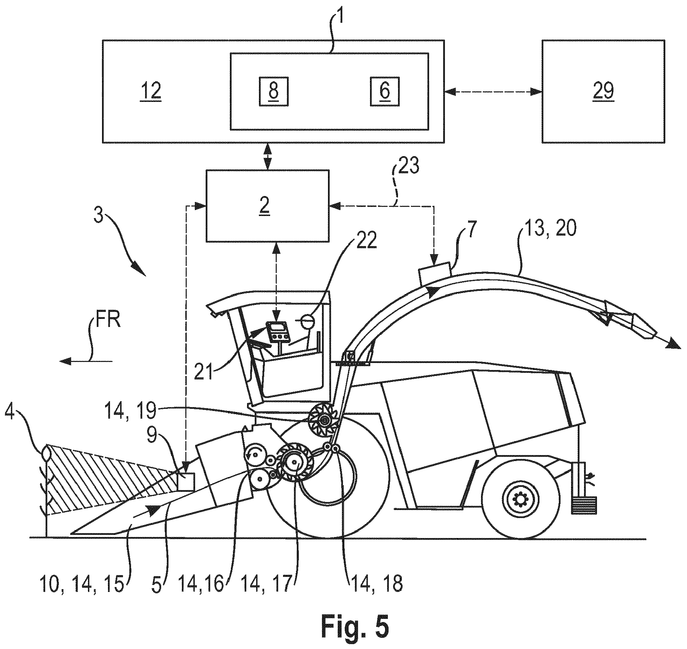

Anhand der Fig. 5 wird das erfindungsgemäße Verfahren zur Erzeugung des Datensatzes 1 zum Training der künstlichen Intelligenz der selbstfahrenden landwirtschaftlichen Arbeitsmaschine 3 im Folgenden beschrieben. Um den Datensatzes 1 zu erzeugen, wird eine selbstfahrende landwirtschaftliche Arbeitsmaschine 3 eingesetzt, die eine RGB-Kameravorrichtung 9 und eine Infrarot-Vorrichtung 7 aufweist. Außerdem weist die selbstfahrende landwirtschaftliche Arbeitsmaschine 3 wenigstens einen Datenspeicher 12 auf, auf der mittels der selbstfahrende landwirtschaftliche Arbeitsmaschine 3 erzeugter Datensatz 1 hinterlegt ist. Die Steuervorrichtung 2 und der Datenspeicher 12 sind derart ausgebildet, dass die Steuervorrichtung 2 den Datensatz 1 des Datenspeichers 12 erzeugen und/oder anpassen und/oder erweitern kann.

Die RGB-Kameravorrichtung 9 ist in der Fig. 5 zur Erfassung eines RGB-Bildes 8 des Ernteguts 4 an dem Vorsatzgerät 15 der selbstfahrenden landwirtschaftlichen Arbeitsmaschine 3 angeordnet, jedoch kann die RGB-Kameravorrichtung 9 zur Erzeugung des Datensatz 1 auch an der selbstfahrende landwirtschaftliche Arbeitsmaschine 3 derart angeordnet sein, wie es in den Fig. 2 bis 4 dargestellt ist, wobei in den Fig. 3 und 4 die RGB-Kameravorrichtung 9 RGB-Bilder 8 des Erntegutstroms 5 erfasst.

Die selbstfahrende landwirtschaftliche Arbeitsmaschine 3 der Fig. 5 ist zur Erzeugung des Datensatzes 1 ausgebildet und/oder programmiert, wobei die Steuervorrichtung 2 kommunizierend mit der Infrarot-Vorrichtung 7, der RGB-Kameravorrichtung 9 und dem Datenspeicher 12 mittels jeweils einer Datenleitung 23 zum Datenaustausch verbunden ist. Die Infrarot-Vorrichtung 7 ist zur Erfassung einer Ernteguteigenschaft des innerhalb der selbstfahrenden landwirtschaftlichen Arbeitsmaschine 3 geförderten Erntegutstroms 5 in Form eines Erntegutstrom-Skalarwertes 6 ausgebildet und/oder programmiert. Die Steuervorrichtung 2 erzeugt den Datensatz 1, in dem wenigstens ein RGB-Bild 8 der RGB-Kameravorrichtung 9 wenigstens einem Erntegutstrom-Skalarwert 6 der Infrarot-Vorrichtung 7 zugeordnet wird.

Die Erzeugung des Datensatzes 1 kann auch mittels einer Computervorrichtung 29 außerhalb der selbstfahrenden landwirtschaftlichen Arbeitsmaschine 3 erfolgen

Die Steuervorrichtung 2 der selbstfahrenden landwirtschaftlichen Arbeitsmaschine 3 kann zur Erzeugung des Datensatzes 1 ausgebildet und/oder programmiert sein, die Fördergeschwindigkeit des aufgenommenen Ernteguts 4, also des Erntegutstroms 5, die innerhalb der selbstfahrenden landwirtschaftlichen Arbeitsmaschine 3 basierend auf Einstellungsparametern der selbstfahrenden landwirtschaftlichen Arbeitsmaschine 3 zu ermitteln, wobei die RGB-Kameravorrichtung 9 und Infrarot-Vorrichtung 7 voneinander eine Beabstandung aufweisen. Die Steuervorrichtung 2 der selbstfahrenden landwirtschaftlichen Arbeitsmaschine 3 kann dazu ausgebildet und/oder programmiert sein, wenigstens ein RGB-Bild 8 der RGB-Kameravorrichtung 9 mit wenigstens einem Erntegutstrom-Skalarwert 6 der Infrarot-Vorrichtung 7 zeitlich in Abhängigkeit der Fördergeschwindigkeit des aufgenommenen Ernteguts 4, also des Erntegutstroms 5, und in Abhängigkeit der Beabstandung der RGB-Kameravorrichtung 9 und der Infrarot-Vorrichtung 7 zu verknüpfen. Da eine RGB-Kameravorrichtung 9 pro festgelegte Zeiteinheit mehrere RGB-Bilder 8 im Vergleich zu der Anzahl der Erntegutstrom-Skalarwerte 6 der Infrarot-Vorrichtung 7 erfassen kann, kann hierdurch eine richtige Zuordnung der RGB-Bilder 8 und der Erntegutstrom-Skalarwerte 6 erzielt werden. Kann es beispielsweise sein, dass pro Sekunde 30 RGB-Bilder 8 durch die RGB-Kameravorrichtung 9 erzeugt werden, während die Infrarot-Vorrichtung 7 pro Sekunde lediglich einen Erntegutstrom-Skalarwert 6 ermittelt.

Der Erntegutstrom-Skalarwert 6 kann ein Trockenmassen-Skalarwert, insbesondere ein Trockenmassen-Skalarwert des Erntegutstroms 5, sein. Ein Trockenmassen-Skalarwert ist ein Wert für den Trockenmassengehalt des Erntegutstroms 5.

Nachdem der Datensatz 1 mittel der selbstfahrenden landwirtschaftlichen Arbeitsmaschine 3 der Fig. 1 erzeugt wurde, und die künstliche Intelligenz damit trainiert wurde, kann auf die Infrarot-Vorrichtung 7 verzichtet werden und beispielsweise mittels der RGB-Kameravorrichtung 9 der Erntegutstrom-Skalarwert 6 ermittelt werden.

Für die selbstfahrenden landwirtschaftlichen Arbeitsmaschine 3 der Fig. 2 bis 4 wird Datensatz 1 derart erfasst, dass die Positionierung der RGB-Kameravorrichtung 9 der Fig. 5 an die Position der RGB-Kameravorrichtung 9 der Fig. 2, Fig. 3 oder Fig. 4 angepasst wird.

Alternativ oder zusätzlich kann die selbstfahrende landwirtschaftliche Arbeitsmaschine 3 auch mehrere RGB-Kameravorrichtungen 9 aufweisen, die z.B. in den Fig. 1 bis Fig. 4 dargestellten Positionen positioniert sind, wobei dann für jede dieser RGB-Kameravorrichtungen 9 ein Datensatz 1 erstellt wird. Mit anderen Worten ausgedrückt, kann die selbstfahrende landwirtschaftliche Arbeitsmaschine 3 mehrere RGB-Kameravorrichtungen 9, insbesondere voneinander beabstandete RGB-Kameravorrichtungen 9, aufweisen und lediglich eine Infrarot-Vorrichtung 7 einsetzen, um für jede der RGB-Kameravorrichtungen 9 jeweils einen Datensatz 1 zu erstellen, wobei nach der Erstellung der Datensätze 1 auf die Infrarot-Vorrichtung 7 wieder verzichtet werden kann.

### Bezugszeichenliste

- 1: Datensatz
- 2: Steuervorrichtung
- 3: selbstfahrenden landwirtschaftlichen Arbeitsmaschine
- 4: Erntegut
- 5: Erntegutstrom
- 6: Erntegutstrom-Skalarwert
- 7: Infrarot-Vorrichtung
- 8: RGB-Bild
- 9: RGB-Kameravorrichtung
- 10: Anbaugerät
- 11: Fahrerkabine
- 12: Datenspeicher
- 13: Fördervorrichtung
- 14: Arbeitsaggregat
- 15: Vorsatzgerät
- 16: Vorpresswalzen
- 17: Häckseltrommel
- 18: Corncracker
- 19: Nachbeschleunigungstrommel
- 20: Auswurfkrümmer
- 21: Terminal
- 22: Benutzer
- 23: Datenleitung
- 24: RGB-Sensor
- 25: Linse
- 26: Spiegel
- 27: Lichtquelle
- 28: Recheneinheit
- 29: Computervorrichtung
- FR: Fahrtrichtung

## Patentansprüche

1. Selbstfahrende landwirtschaftliche Arbeitsmaschine (3) zur Aufnahme von Erntegut (4) und zur Bearbeitung und Förderung eines aus dem aufgenommenen Erntegut (4) gebildeten Erntegutstroms (5),
- mit einer Steuervorrichtung (2) zur Steuerung und/oder Regelung der selbstfahrenden landwirtschaftlichen Arbeitsmaschine (3),
- mit einer RGB-Kameravorrichtung (9) zur Erfassung eines RGB-Bildes (8) des Ernteguts (4),
- mit einer Recheneinheit (28), die dazu vorgesehen und eingerichtet ist, eine künstliche Intelligenz zur Auswertung eines RGB-Bildes (8) zu nutzen,
**dadurch gekennzeichnet,**
- **dass** die künstliche Intelligenz dazu vorgesehen und eingerichtet ist, eine Ernteguteigenschaft zu bestimmen,
- wobei die Recheneinheit (28) dazu vorgesehen und eingerichtet ist, eine Feuchte des Ernteguts (4) zu bestimmen.

2. Selbstfahrende landwirtschaftliche Arbeitsmaschine (3) nach Anspruch 1,
**dadurch gekennzeichnet,**
**dass** die Feuchte sich auf das Erntegut (4) auf einem zu bearbeitenden Territorium und/oder sich auf das aufgenommene Erntegut (4), welches den Erntegutstrom (5) ausbildet, bezieht.

3. Selbstfahrende landwirtschaftliche Arbeitsmaschine (3) nach Anspruch 1 oder 2,
**dadurch gekennzeichnet,**
**dass** die künstliche Intelligenz dazu vorgesehen und eingerichtet ist, für das RGB-Bild (8) als Ernteguteigenschaft einen Erntegutstrom-Skalarwert (6) einer nicht vorhandenen Infrarot-Vorrichtung (7) zu bestimmen.

4. Selbstfahrende landwirtschaftliche Arbeitsmaschine (3) nach einem der vorhergehenden Ansprüche,
**dadurch gekennzeichnet,**
**dass** die RGB-Kameravorrichtung (9) an der selbstfahrenden landwirtschaftlichen Arbeitsmaschine (3) zur Erfassung des RGB-Bildes (8) des geförderten Erntegutstroms (5) und/oder zur Erfassung des RGB-Bildes (8) des Ernteguts (4) angeordnet ist.

5. Selbstfahrende landwirtschaftliche Arbeitsmaschine (3) nach einem der vorhergehenden Ansprüche,
**dadurch gekennzeichnet,**
- **dass** die RGB-Kameravorrichtung (9) an einer Fördervorrichtung (13) der selbstfahrenden landwirtschaftlichen Arbeitsmaschine (3) zur Erfassung des geförderten Erntegutstroms (5) angeordnet ist, und/oder
- **dass** die RGB-Kameravorrichtung (9) an einem Anbaugerät (10) der selbstfahrenden landwirtschaftlichen Arbeitsmaschine (3) zur Erfassung des geförderten Erntegutstroms (5) und/oder des Ernteguts (4) angeordnet ist, und/oder
- **dass** die RGB-Kameravorrichtung (9) innerhalb einer Fahrerkabine (11) der selbstfahrenden landwirtschaftlichen Arbeitsmaschine (3) zur Erfassung des Ernteguts (4) angeordnet ist.

6. Selbstfahrende landwirtschaftliche Arbeitsmaschine (3) nach einem der vorhergehenden Ansprüche,
**dadurch gekennzeichnet,**
**dass** die künstliche Intelligenz ein Neuronales Netzwerk ist, welches dazu trainiert ist, für ein RGB-Bild (8) eines Ernteguts (4) als Ernteguteigenschaft einen Trockenmassen-Skalarwert (6) des Ernteguts (4) zu ermitteln und/oder für ein RGB-Bild (8) eines Erntegutstroms (5) als Ernteguteigenschaft einen Trockenmassen-Skalarwert (6) des zu Erntegutstroms (5) zu ermitteln.

7. Selbstfahrende landwirtschaftliche Arbeitsmaschine (3) nach einem der vorhergehenden Ansprüche,
**dadurch gekennzeichnet,**
**dass** die Steuervorrichtung (2) dazu ausgebildet und/oder programmiert ist, die selbstfahrende landwirtschaftliche Arbeitsmaschine (3) basierend auf der mittels der Recheneinheit (28) bestimmten Feuchte des Ernteguts (4) anzusteuern.

8. Verfahren zur Erzeugung eines Datensatzes (1) zum Training der künstlichen Intelligenz der selbstfahrenden landwirtschaftlichen Arbeitsmaschine (3) nach einem der vorhergehenden Ansprüche mit den folgenden Verfahrensschritten:
- Erfassung einer Ernteguteigenschaft, insbesondere eine Ernteguteigenschaft innerhalb der selbstfahrenden landwirtschaftlichen Arbeitsmaschine (3) geförderten Erntegutstroms (5), in Form eines Erntegutstrom-Skalarwertes (6) mittels einer Infrarot-Vorrichtung (7),
- Erfassung eines RGB-Bildes (8) des Ernteguts (4) und/oder des Erntegutstroms (5) mittels einer RGB-Kameravorrichtung (9),
- Erzeugung des Datensatzes (1), in dem wenigstens ein RGB-Bild (8) der RGB-Kameravorrichtung (9) wenigstens einem Erntegutstrom-Skalarwert (6), insbesondere der Infrarot-Vorrichtung (7), zugeordnet wird.

9. Verfahren nach Anspruch 8,
**dadurch gekennzeichnet,**
- **dass** die Fördergeschwindigkeit des aufgenommenen Ernteguts (4) innerhalb der selbstfahrenden landwirtschaftlichen Arbeitsmaschine (3) basierend auf Einstellungsparametern der selbstfahrenden landwirtschaftlichen Arbeitsmaschine (3) ermittelt wird,
- wobei die RGB-Kameravorrichtung (9) und Infrarot-Vorrichtung (7) voneinander eine Beabstandung aufweisen,
- wobei wenigstens ein RGB-Bild (8) der RGB-Kameravorrichtung (9) mit wenigstens einem Erntegutstrom-Skalarwert (6) der Infrarot-Vorrichtung (7) zeitlich in Abhängigkeit der Fördergeschwindigkeit des aufgenommenen Ernteguts (4) und in Abhängigkeit der Beabstandung der RGB-Kameravorrichtung (9) und der Infrarot-Vorrichtung (7) verknüpft wird.

10. Verfahren nach Anspruch 8 oder 9,
**dadurch gekennzeichnet,**
**dass** mehrere RGB-Bilder (8) der RGB-Kameravorrichtung (9) einem Erntegutstrom-Skalarwert (6) der Infrarot-Vorrichtung (7) zugeordnet werden.

11. Verfahren nach einem der Ansprüche 8 bis 10,
**dadurch gekennzeichnet,**
**dass** die Erzeugung des Datensatzes (1) mittels der Steuervorrichtung (2) der selbstfahrenden landwirtschaftlichen Arbeitsmaschine (3) und/oder mittels einer Computervorrichtung (10) außerhalb der selbstfahrenden landwirtschaftlichen Arbeitsmaschine (3) erfolgt.

12. Verfahren nach einem der Ansprüche 8 bis 11,
**dadurch gekennzeichnet,**
**dass** der Erntegutstrom-Skalarwert (6) ein Trockenmassen-Skalarwert (6), insbesondere ein Trockenmassen-Skalarwert (6) des Erntegutstroms (5), ist.

13. Verfahren nach einem der Ansprüche 8 bis 12,
**dadurch gekennzeichnet,**
**dass** eine Erfassung einer Ernteguteigenschaft des innerhalb der selbstfahrenden landwirtschaftlichen Arbeitsmaschine (3) geförderten Erntegutstroms (5) in Form eines RGB-Bildes (8) mittels einer RGB-Kameravorrichtung (9) erfolgt.

14. Verfahren nach einem der Ansprüche 8 bis 13,
**dadurch gekennzeichnet,**
**dass** eine Erfassung einer Ernteguteigenschaft des Ernteguts (4) in Form eines RGB-Bildes (8) mittels einer RGB-Kameravorrichtung (9) erfolgt, wobei die RGB-Kameravorrichtung (9) an einem Anbaugerät (10) der selbstfahrenden landwirtschaftlichen Arbeitsmaschine (3) und/oder innerhalb einer Fahrerkabine (11) der selbstfahrenden landwirtschaftlichen Arbeitsmaschine (3) angeordnet ist.

15. Verfahren nach einem der Ansprüche 8 bis 14,
**dadurch gekennzeichnet,**
**dass** die RGB-Kameravorrichtung (9) und/oder die Infrarot-Vorrichtung (7) an einer Fördervorrichtung (13) der selbstfahrenden landwirtschaftlichen Arbeitsmaschine (3) zur Erfassung eines durch diese Fördervorrichtung (13) strömenden Erntegutstroms (5) angeordnet ist.
